# EUROPEAN PATENT APPLICATION

(11) **EP 3 187 716 A1**
(43) Date of publication of application: **05.07.2017**
(21) Application number: 16203503.4
(22) Date of filing: 12.12.2016
(51) Int. Cl.: F02C 7/14, F02C 7/18, F02C 7/32

(54) **METHOD AND SYSTEM FOR COMPRESSOR AND TURBINE COOLING**

(30) Priority: 29.12.2015 US 201514982690
(71) Applicant: General Electric Company, Schenectady, NY 12345 (US)
(72) Inventor: MONIZ, Thomas Ory, Cincinnati, OH Ohio 45215 (US); ROSE, Joseph George, Cincinnati, OH Ohio 45215 (US)
(74) Representative: Williams, Andrew Richard

(57) **Abstract**

The gas turbine engine (110) blade cooling system (200) includes a super-charger (202) drivingly coupled to a turbine shaft (136) through a gearbox (206). The super-charger (202) configured to increase a pressure of a flow of compressor discharge air. The gas turbine engine (110) blade cooling system (200) also includes a heat exchanger (204) configured to receive a flow of pressurized air from the super-charger (202). The heat exchanger (204) configured to transfer heat from the flow of pressurized air from the super-charger (202) to a flow of air from a fan (138) of the gas turbine engine (110). The gas turbine engine (110) blade cooling system (200) also includes a blade cooling distribution header (216) configured to channel the cooled pressurized air from the heat exchanger (204) to at least one of a plurality of blades and disks (175) of a high-pressure compressor (124) and a plurality of blades and disks of a high-pressure turbine (170) of the gas turbine engine (110).

## Description

### BACKGROUND

The field of the disclosure relates generally to gas turbine engines and, more particularly, to a method and system for cooling compressors and turbines.

Gas turbine engines typically include high pressure compressors in the core engine. As the overall performance of gas turbine engines increases, typically the discharge temperatures of high pressure compressors also increase. If the discharge temperatures become too high, metal components of gas turbine engines may not withstand the temperatures and the components may require cooling. At least some known compressor and turbine cooling systems use turbochargers and heat exchangers to cool compressor discharger pressure (CDP) air. It is typically required to further pressurize the CDP air to compensate for the pressure loss across the required heat exchanger. Turbochargers use CDP air on the turbine side of the turbocharger to drive the compressor side of the turbocharger to increase the pressure of CDP air. The compressed CDP air is sent to the heat exchanger to cool and then sent to cool metal components of gas turbine engines. Turbochargers are an inefficient method for increasing the pressure of CDP air because the CDP air from the turbine side of the turbocharger is discarded.

### BRIEF DESCRIPTION

In one aspect, a rotatable machine cooling system is provided. The rotatable machine cooling system includes a super-charger drivingly coupled to a shaft of the rotatable machine through an accessory gearbox. The su
per-charger configured to increase a pressure of a flow of cooling fluid from a compressor rotatable with the shaft. The rotatable machine cooling system also includes a heat exchanger configured to receive the flow of pressurized cooling fluid from the super-charger. The heat exchanger configured to transfer heat from the flow of pressurized cooling fluid to a flow of coolant from a fan rotatable about the shaft.

The rotatable machine cooling system further includes a distribution header configured to channel the cooled pressurized cooling fluid from the heat exchanger to at least one of a plurality of rotatable components on the shaft.

In another aspect, a gas turbine engine blade cooling system is provided. The gas turbine engine blade cooling system includes a heat exchanger configured to receive a flow of pressurized air. The heat exchanger configured to transfer heat from the flow of pressurized air to a flow of air from a fan of the gas turbine engine. The gas turbine engine blade cooling system also includes a super-charger drivingly coupled to a core power take-off (PTO) shaft through a gearbox. The super-charger configured to increase a pressure of a flow of cooled pressurized air from the heat exchanger. The gas turbine engine blade cooling system also includes a blade cooling distribution header configured to channel the cooled pressurized air from the super-charger to at least one of a plurality of blades of a high-pressure compressor and a plurality of blades of a high-pressure turbine of the gas turbine engine.

In yet another aspect, a method of cooling a rotatable machine is provided. The method includes channeling a flow of pressurized cooling fluid to a super-charger. The super-charger drivingly coupled to a PTO shaft through a gearbox. The method also includes compressing a flow of pressurized cooling fluid using the super-charger. The method further includes channeling a flow of pressurized cooling fluid from the super-charger to a heat exchanger. The method also includes transferring heat from the flow of pressurized cooling fluid to a flow of air from a fan of the gas turbine engine. The method further includes channeling a flow of cooled pressurized cooling fluid from the heat exchanger to at least one of a plurality of rotatable components on the shaft.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic illustration of an exemplary gas turbine engine in accordance with an example embodiment of the present disclosure.
FIG. 2 is a schematic block diagram of a compressor and turbine cooling system with the super-charger feeding the heat exchangers.
FIG. 3 is a schematic block diagram of a compressor and turbine cooling system with the heat exchangers feeding the super-charger.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a," "an," and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise.

Embodiments of the compressor and turbine cooling systems described herein cool components of compressors and turbines in gas turbine engines. The compressor and turbine cooling system includes a super-charger driven by an accessory gearbox and a plurality of heat exchangers. Compressor discharge pressure (CDP) air is channeled to the super-charger to increase the pressure of the CDP air. The CDP air is directed from the super-charger to the heat exchangers in, for example, a bypass duct of the gas turbine engine, where the CDP air is cooled by exchanging heat with fan air in the bypass duct. The cooled CDP air is channeled to the rotating members of the HP compressor and HP turbine to cool the compressor blades, disk rims, and turbine blades. In an alternative embodiment, CDP air is first directed to the heat exchangers to be cooled by fan air in the fan bypass duct and then is directed to the super-charger where the pressure of the CDP air is increased. The CDP air is channeled from the super-charger to the HP compressor and HP turbine rotor to cool the blades and disks of the HP compressor and HP turbine.

The compressor and turbine cooling systems described herein offer advantages over known methods of cooling compressors and turbines in gas turbine engines. The compressor and turbine cooling systems described herein use a super-charger to increase the pressure of CDP air. Super-chargers are driven by the accessory gearbox and the HP spool via the PTO shaft. Super-chargers are a more efficient method of increasing the pressure of CDP air than turbochargers because super-chargers are not driven by CDP air and do not discard CDP air.

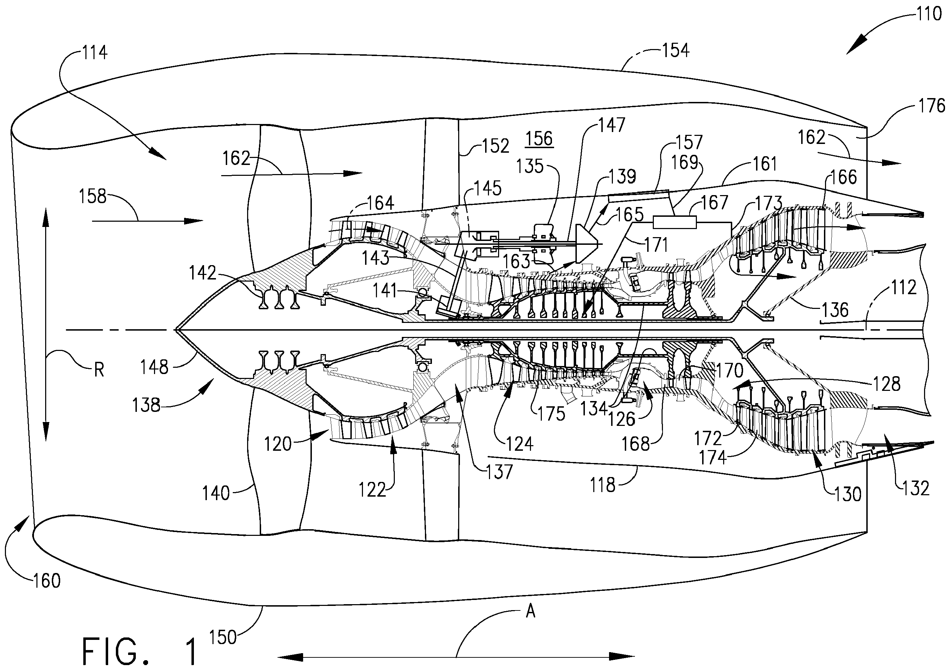

FIG. 1 is a schematic cross-sectional view of a gas turbine engine in accordance with an exemplary embodiment of the present disclosure. In the example embodiment, the gas turbine engine is a high-bypass turbofan jet engine 110, referred to herein as "turbofan engine 110." As shown in FIG. 1, turbofan engine 110 defines an axial direction A (extending parallel to a longitudinal centerline 112 provided for reference) and a radial direction R. In general, turbofan 110 includes a fan section 114 and a core turbine engine 116 disposed downstream from fan section 114.

Core turbine engine 116 includes a substantially tubular outer casing 118 that defines an annular inlet 120. Outer casing 118 encases, in serial flow relationship, a compressor section including a booster or low pressure (LP) compressor 122 and a high pressure (HP) compressor 124; a combustion section 126; a turbine section including a high pressure (HP) turbine 128 and a low pressure (LP) turbine 130; and a jet exhaust nozzle section 132. A high pressure (HP) shaft or spool 134 drivingly connects HP turbine 128 to HP compressor 124. A low pressure (LP) shaft or spool 136 drivingly connects LP turbine 130 to LP compressor 122. The compressor section, combustion section 126, turbine section, and nozzle section 132 together define a core air flow path 137.

An accessory gearbox 135 is coupled to a super-charger 139. Accessory gearbox 135 includes an internal inlet gearbox 141, a radial shaft 143, a transfer gearbox 145, and a super-charger shaft 147. Internal inlet gearbox 141 is coupled to HP shaft or spool 134 and to a radial shaft 143. Radial shaft 143 extends radially from internal inlet gearbox 141 and is coupled to transfer gearbox 145. Super-charger shaft 147 extends axially from transfer gearbox 145 and is coupled to super-charger 139.

In the example embodiment, fan section 114 includes a fan 138 having a plurality of fan blades 140 coupled to a disk 142 in a spaced apart manner. As depicted, fan blades 140 extend outwardly from disk 142 generally along radial direction R. Fan blades 140 and disk 142 are together rotatable about longitudinal axis 112 by LP shaft 136.

Referring still to the exemplary embodiment of FIG. 1, disk 142 is covered by rotatable front spinner 148 aerodynamically contoured to promote an airflow through plurality of fan blades 140. Additionally, exemplary fan section 114 includes an annular fan casing or outer nacelle 150 that circumferentially surrounds fan 138 and/or at least a portion of core turbine engine 116. It should be appreciated that nacelle 150 may be configured to be supported relative to core turbine engine 116 by a plurality of circumferentially-spaced outlet guide vanes 152. Moreover, a downstream section 154 of nacelle 150 may extend over an outer portion of core turbine engine 116 so as to define a bypass airflow passage 156 therebetween. A plurality of heat exchangers 157 is disposed on outer radial surface 161 of outer casing 118 in bypass airflow passage 156. In the exemplary embodiment, heat exchangers 157 include surface air coolers.

During operation of turbofan engine 110, a volume of air 158 enters turbofan 110 through an associated inlet 160 of nacelle 150 and/or fan section 114. As volume of air 158 passes across fan blades 140, a first portion of air 158 as indicated by arrows 162 is directed or routed into bypass airflow passage 156 and a second portion of air 158 as indicated by arrow 164 is directed or routed into core air flow path 137, or more specifically into LP compressor 122. The ratio between first portion of air 162 and second portion of air 164 is commonly known as a bypass ratio. The pressure of second portion of air 164 is then increased as it is routed through HP compressor 124 and into combustion section 126, where it is mixed with fuel and burned to provide combustion gases 166.

As pressure of second portion of air 164 is increased, a compressor discharge pressure (CDP) air flow as indicated by arrows 163 is channeled into super-charger 139. Super-charger 139 increases the pressure of CDP air 163 and channels CDP air 163 into heat exchangers 157 as indicated by arrow 165. First portion of air 162 exchanges heat with heat exchangers 157 and cools CDP air 165. CDP air 165 is channeled into a blade distribution header 167 as indicated by arrow 169. CDP air 169 is channeled into HP compressor 124 and HP turbine 128 as indicated by arrows 171 and 173 to cool a plurality of HP compressor blades and disks 175 and HP turbine rotor blades and disks 170.

Combustion gases 166 are routed through HP turbine 128 where a portion of thermal and/or kinetic energy from combustion gases 166 is extracted via sequential stages of HP turbine stator vanes 168 that are coupled to outer casing 118 and HP turbine rotor blades 170 that are coupled to HP shaft or spool 134, thus causing HP shaft or spool 134 to rotate, thereby supporting operation of HP compressor 124. Combustion gases 166 are then routed through LP turbine 130 where a second portion of thermal and kinetic energy is extracted from combustion gases 166 via sequential stages of LP turbine stator vanes 172 that are coupled to outer casing 118 and LP turbine rotor blades 174 that are coupled to LP shaft or spool 136, thus causing LP shaft or spool 136 to rotate, thereby supporting operation of LP compressor 122 and/or rotation of fan 138. HP shaft or spool 134 is configured to drive internal inlet gearbox 141 which is configured to drive transfer gearbox 145 through radial shaft 143. Transfer gearbox 145 is configured to drive super-charger 139 through super-charger shaft 147.

Combustion gases 166 are subsequently routed through jet exhaust nozzle section 132 of core turbine engine 116 to provide propulsive thrust. Simultaneously, the pressure of first portion of air 162 is substantially increased as first portion of air 162 is routed through bypass airflow passage 156 before it is exhausted from a fan nozzle exhaust section 176 of turbofan 110, also providing propulsive thrust. HP turbine 128, LP turbine 130, and jet exhaust nozzle section 132 at least partially define a hot gas path 178 for routing combustion gases 166 through core turbine engine 116.

It should be appreciated, however, that exemplary turbofan engine 110 depicted in FIG. 1 is by way of example only, and that in other exemplary embodiments, turbofan engine 110 may have any other suitable configuration. It should also be appreciated, that in still other exemplary embodiments, aspects of the present disclosure may be incorporated into any other suitable gas turbine engine. For example, in other exemplary embodiments, aspects of the present disclosure may be incorporated into, e.g., a turboprop engine.

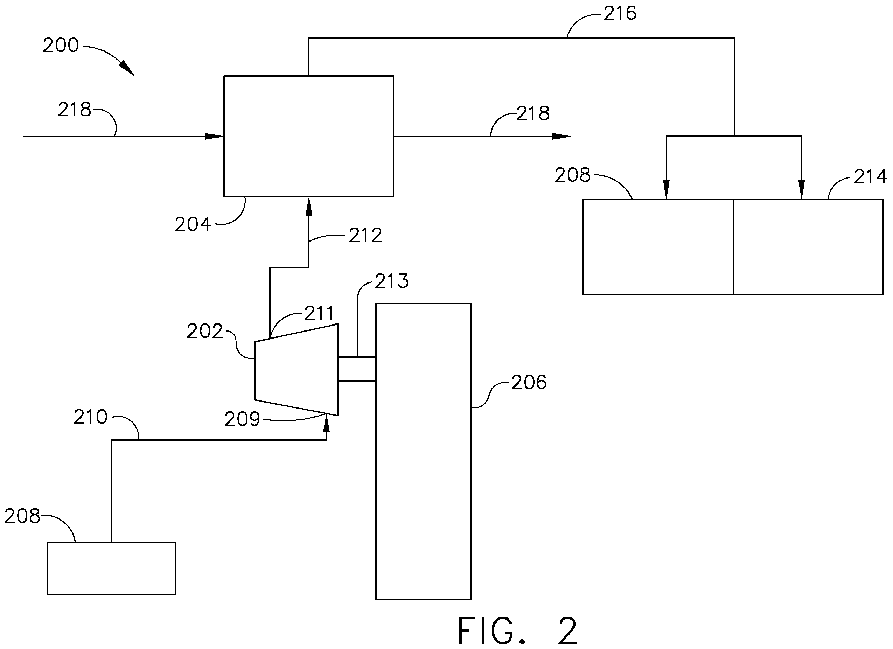

FIG. 2 is a schematic block diagram of a compressor and turbine cooling system 200. Compressor and turbine cooling system 200 includes a super-charger 202, a plurality of heat exchangers 204, and an accessory gearbox assembly 206. A high pressure (HP) compressor 208 is coupled in flow communication with an inlet 209 of super-charger 202 through super-charger header 210. An outlet 211 of super-charger 202 is coupled in flow communication with heat exchangers 204 through heat exchanger header 212. Accessory gearbox 206 is coupled to super-charger 202 through a shaft 213 or super-charger shaft 147 (shown in FIG. 1, not shown in FIG. 2). Heat exchangers 204 are coupled in flow communication with HP compressor 208 and a high pressure (HP) turbine 214 through a blade distribution header 216. In the exemplary embodiment, heat exchangers 204 are air coolers disposed on outer radial surface 161 (shown in FIG. 1, not shown in FIG. 2) of outer casing 118 (shown in FIG. 1, not shown in FIG. 2) in bypass airflow passage 156 (shown in FIG. 1, not shown in FIG. 2).

During operation, super-charger header 210 is configured to channel a plurality of flows of compressor discharge pressure (CDP) air from HP compressor 208 into super-charger 202. Accessory gearbox 206 is configured to drive super-charger 202. Super-charger 202 increases the pressure of the CDP air. Heat exchanger header 212 is configured to channel the CDP air from super-charger 202 into heat exchangers 204. Fan stream air 218 exchanges heat with heat exchangers 204 and cools the CDP air. Blade distribution header 216 is configured to channel the CDP air into HP compressor 208 and HP turbine 214 to cool HP compressor blades 175 (shown in FIG. 1, not shown in FIG. 2) and HP turbine rotor blades 170 (shown in FIG. 1, not shown in FIG. 2).

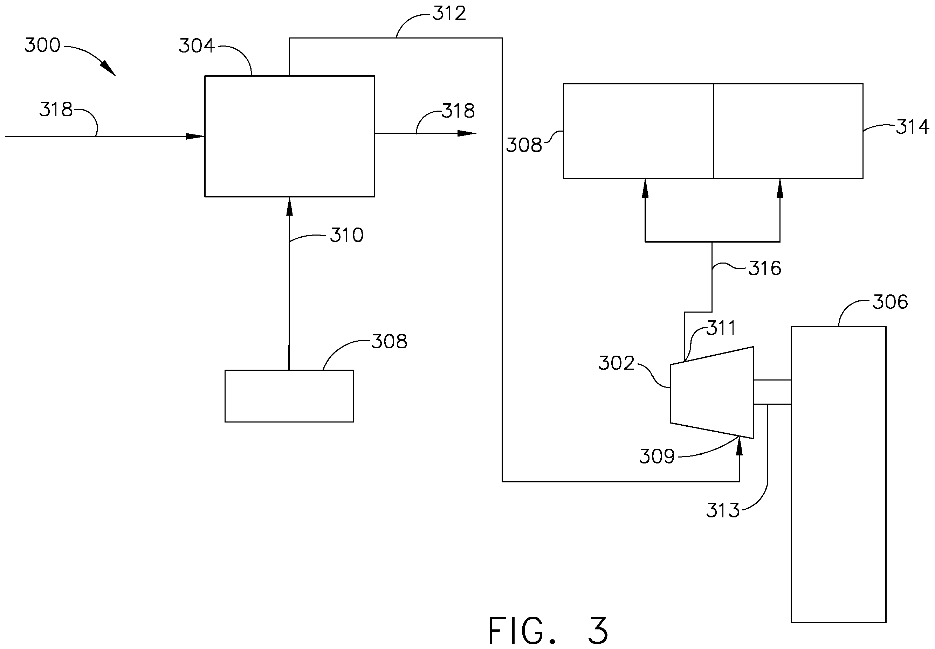

FIG. 3 is a schematic block diagram of a compressor and turbine cooling system 300. Compressor and turbine cooling system 300 includes a super-charger 302, a plurality of heat exchangers 304, and an accessory gearbox assembly 306. A high pressure (HP) compressor 308 is coupled in flow communication with heat exchangers 304 through heat exchanger header 310. Heat exchangers 304 are coupled in flow communication with an inlet 309 of super-charger 302 through super-charger header 312. Accessory gearbox 306 is coupled to super-charger 302 through a shaft 313. An outlet 311 of super-charger 302 is coupled in flow communication with HP compressor 308 and a high pressure (HP) turbine 314 through a blade distribution header 316. In the exemplary embodiment, heat exchangers 304 are air coolers disposed on outer radial surface 161 (shown in FIG. 1, not shown in FIG. 3) of outer casing 118 (shown in FIG. 1, not shown in FIG. 3) in bypass airflow passage 156 (shown in FIG. 1, not shown in FIG. 3).

During operation, heat exchanger header 310 is configured to channel a plurality of flows of compressor discharge pressure (CDP) air from HP compressor 308 into heat exchangers 304. Fan stream air 318 exchanges heat with heat exchangers 304 and cools the CDP air. Super-charger header 312 is configured to channel the CDP air from heat exchangers 304 into super-charger 302. Accessory gearbox 306 is configured to drive super-charger 302. Super-charger 302 increases the pressure of the CDP air. Blade distribution header 316 is configured to channel the CDP air into HP compressor 308 and HP turbine 314 to cool HP compressor blades 175 (shown in FIG. 1, not shown in FIG. 3) and HP turbine rotor blades 170 (shown in FIG. 1, not shown in FIG. 3).

The above-described bleed systems provide an efficient method for cooling compressors and turbines in gas turbine engines. Specifically, the above-described compressor and turbine cooling system includes a super-charger that increases the pressure of CDP air. Super-chargers are driven by the HP shaft and not CDP air. As such, supercharges do not discard CDP air and the efficiencies of the gas turbine engine are increased. Additionally, a system for discarding CDP air is eliminated, reducing the weight of the engine.

An exemplary technical effect of the methods, systems, and apparatus described herein includes at least one of: (a) cooling high pressure compressor blades and disk rims, (b) cooling high pressure turbine blades and disk rims, (c) reducing overall system weight while maintaining or improving engine performance and mitigating thermal risks to compressor and turbine blades and disks, and (d) improving the efficiency of the compressor and turbine cooling system.

Exemplary embodiments of compressor and turbine cooling systems are described above in detail. The compressor and turbine cooling system, and methods of operating such systems and component devices are not limited to the specific embodiments described herein, but rather, components of the systems and/or steps of the methods may be utilized independently and separately from other components and/or steps described herein. For example, the methods may also be used in combination with other systems requiring cooling of compressors and turbines, and are not limited to practice with only the systems and methods as described herein. Rather, the exemplary embodiment can be implemented and utilized in connection with many other machinery applications that are currently configured to receive and accept compressor and turbine cooling systems.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A rotatable machine cooling system comprising:
   a super-charger drivingly coupled to a shaft of the rotatable machine through a gearbox, said super-charger configured to increase a pressure of a flow of cooling fluid from a compressor rotatable with said shaft;
   a heat exchanger configured to receive the flow of pressurized cooling fluid from said super-charger, said heat exchanger configured to transfer heat from the flow of pressurized cooling fluid to a flow of coolant from a fan rotatable about said shaft; and
   a distribution header configured to channel the cooled pressurized cooling fluid from said heat exchanger to at least one of a plurality of rotatable components on the shaft.
2. The system of clause 1, further comprising a header configured to channel at least a portion of the flow of compressor discharge air from a high pressure compressor outlet to an inlet of said super-charger.
3. The system of clause 1 or 2, wherein said heat exchanger is positioned in a bypass duct of said gas turbine engine.
4. The system of any preceding clause, further comprising a header configured to channel at least a portion of the flow of compressor discharge air from an outlet of said super-charger to an inlet of said heat exchanger.
5. The system of any preceding clause, wherein said turbine shaft comprises a low pressure turbine shaft.
6. The system of any preceding clause, wherein said gearbox comprises an accessory gearbox assembly of a gas turbine engine.
7. The system of any preceding clause, wherein said heat exchanger comprises a surface cooler.
8. A rotatable machine cooling system comprising:
   a heat exchanger configured to receive a flow of pressurized cooling fluid from a compressor rotatable with a shaft, said heat exchanger configured to transfer heat from the flow of pressurized cooling fluid to a flow of coolant from a fan rotatable about said shaft;
   a super-charger drivingly coupled to said shaft of the rotatable machine through a gearbox, said super-charger configured to increase a pressure of the flow of cooling fluid from said heat exchanger; and
   a distribution header configured to channel the cooled pressurized cooling fluid from said super-charger to at least one of a plurality of rotatable components on the shaft.
9. The system of clause 8, further comprising a header configured to channel at least a portion of a flow of compressor discharge air from a high pressure compressor outlet to an inlet of said heat exchanger.
10. The system of clause 8 or 9, wherein said heat exchanger is positioned in a bypass duct of said gas turbine engine.
11. The system of any of clauses 8 to 10, further comprising a header configured to channel at least a portion of the flow of compressor discharge air from an outlet of said heat exchanger to an inlet of said super-charger.
12. The system of any of clauses 8 to 11, wherein said turbine shaft comprises a high pressure turbine shaft.
13. The system of any of clauses 8 to 12, wherein said heat exchanger comprises a surface air cooler.
14. The system of any of clauses 8 to 13, wherein said gearbox comprises an accessory gearbox assembly of the gas turbine engine.
15. A method of cooling a rotatable machine comprising:
   channeling a flow of pressurized cooling fluid to a super-charger, the super-charger drivingly coupled to a turbine shaft through a gearbox;
      compressing a flow of pressurized cooling fluid using the super-charger;
   channeling a flow of pressurized cooling fluid from the super-charger to a heat exchanger;
      transferring heat from the flow of pressurized cooling fluid to a flow of air from a fan of the gas turbine engine; and
      channeling a flow of cooled pressurized cooling fluid from the heat exchanger to at least one of a plurality of rotatable components on the shaft.
16. The method of clause 15, wherein channeling a flow ofpressurized cooling fluid to a super-charger comprises channeling a flow of compressor discharge air to a super-charger.
17. The method of clause 15 or 16, wherein channeling a flow of pressurized cooling fluid from the super-charger to a heat exchanger comprises channeling a flow of pressurized air from the super-charger to a heat exchanger through a header.
18. The method of any of clauses 15 to 17, wherein channeling a flow of pressurized cooling fluid to a super-charger comprises channeling a flow of compressor discharge air from a high pressure compressor to a super-charger.
19. The method of any of clauses 15 to 18, wherein channeling a flow of cooled pressurized cooling fluid from the heat exchanger to at least one of a plurality of rotatable components on the shaft comprises channeling a flow of cooled pressurized cooling fluid from the heat exchanger to a high pressure compressor.
20. The method of any of clauses 15 to 19, wherein channeling a flow of cooled pressurized cooling fluid from the heat exchanger to at least one of a plurality of rotatable components on the shaft comprises channeling a flow of cooled compressor discharge air from the heat exchanger to at least one of a plurality of rotatable components on the shaft.

## Claims

1. A rotatable machine (110) cooling system (200) comprising:
a super-charger (202) drivingly coupled to a shaft (136) of the rotatable machine (110) through a gearbox (206), said super-charger (202) configured to increase a pressure of a flow of cooling fluid from a compressor rotatable (124) with said shaft (136);
a heat exchanger (204) configured to receive the flow of pressurized cooling fluid from said super-charger (202), said heat exchanger (204) configured to transfer heat from the flow of pressurized cooling fluid to a flow of coolant from a fan (138) rotatable about said shaft (136); and
a distribution header (216) configured to channel the cooled pressurized cooling fluid from said heat exchanger (204) to at least one of a plurality of rotatable components (175) on the shaft (136).

2. The system of Claim 1, further comprising a header (212) configured to channel at least a portion of the flow of compressor discharge air from a high pressure compressor outlet to an inlet (209) of said super-charger (202).

3. The system of Claim 1 or 2, wherein said heat exchanger (204) is positioned in a bypass duct (150) of said gas turbine engine (110).

4. The system of any preceding Claim, further comprising a header (212) configured to channel at least a portion of the flow of compressor discharge air from an outlet (211) of said super-charger (202) to an inlet of said heat exchanger (204).

5. The system of any preceding Claim, wherein said turbine shaft (136) comprises a low pressure turbine shaft (136).

6. The system of any preceding Claim, wherein said gearbox (206) comprises an accessory gearbox (206) assembly of a gas turbine engine (110).

7. The system of any preceding Claim, wherein said heat exchanger (204) comprises a surface cooler (204).

8. A rotatable machine (110) cooling system (200) comprising:
a heat exchanger (204) configured to receive a flow of pressurized cooling fluid from a compressor rotatable (124) with a shaft (136), said heat exchanger (204) configured to transfer heat from the flow of pressurized cooling fluid to a flow of coolant from a fan (138) rotatable about said shaft (136);
a super-charger (202) drivingly coupled to said shaft (136) of the rotatable machine (110) through a gearbox (206), said super-charger (202) configured to increase a pressure of the flow of cooling fluid from said heat exchanger (204); and
a distribution header (216) configured to channel the cooled pressurized cooling fluid from said super-charger (202) to at least one of a plurality of rotatable components (175) on the shaft (136).

9. The system of Claim 8, further comprising a header (310) configured to channel at least a portion of a flow of compressor discharge air from a high pressure compressor (124) outlet to an inlet of said heat exchanger (304).

10. The system of Claim 8 or 9, wherein said heat exchanger (204) is positioned in a bypass duct (150) of said gas turbine engine (110).

11. A method of cooling a rotatable machine comprising:
channeling a flow of pressurized cooling fluid to a super-charger (202), the super-charger drivingly coupled to a turbine shaft (136) through a gearbox;
compressing a flow of pressurized cooling fluid using the super-charger (202);
channeling a flow of pressurized cooling fluid from the super-charger (202) to a heat exchanger (204);
transferring heat from the flow of pressurized cooling fluid to a flow of air from a fan (138) of the gas turbine engine; and
channeling a flow of cooled pressurized cooling fluid from the heat exchanger (204) to at least one of a plurality of rotatable components on the shaft (136).

12. The method of Claim 11, wherein channeling a flow of pressurized cooling fluid to a super-charger (202) comprises channeling a flow of compressor discharge air to a super-charger (202).

13. The method of Claim 11 or 12, wherein channeling a flow ofpressurized cooling fluid from the super-charger (202) to a heat exchanger (204) comprises channeling a flow of pressurized air from the super-charger (202) to a heat exchanger (204) through a header.

14. The method of any of Claims 11 to 13, wherein channeling a flow of pressurized cooling fluid to a super-charger (202) comprises channeling a flow of compressor discharge air from a high pressure compressor (124) to a super-charger (202).

15. The method of any of Claims 11 to 14, wherein channeling a flow of cooled pressurized cooling fluid from the heat exchanger (204) to at least one of a plurality of rotatable components (175) on the shaft comprises channeling a flow of cooled pressurized cooling fluid from the heat exchanger to a high pressure compressor (124).
